# FASCICULE DE BREVET EUROPEEN

(11) **EP 2 643 097 B1**
(45) Date de publication et mention de la délivrance du brevet: **22.08.2018**
(21) Numéro de dépôt: 11799766.8
(22) Date de dépôt: 22.11.2011
(51) Int. Cl.: B05C 13/02, B29D 11/00

(54) **DISPOSITIF PORTE-VERRE DOUBLE**
DOPPELHALTEVORRICHTUNG FÜR LINSE
DOUBLE LENS-HOLDING DEVICE

(30) Priorité: 25.11.2010 FR 1059716
(43) Date de publication de la demande: 02.10.2013
(73) Titulaire: SPECIAL COATING LABORATORY INTERNATIONAL (S.C.L. INTERNATIONAL), 74160 Archamps (FR)
(72) Inventeur: GEHRIG, Jean, F-74580 Viry (FR); GEHRIG, Denis, F-74160 Saint-Julien en Genevois (FR)
(74) Mandataire: Verriest, Philippe
(86) Numéro de dépôt international: PCT/FR2011/052725
(87) Numéro de publication internationale: WO 2012/069756

(56) Documents cités:
- EP-A1- 1 428 585
- WO-A1-2005/089956
- GB-A- 2 208 322
- JP-A- 2010 020 138
- US-A- 5 446 596

## Description

La présente invention a pour objet un dispositif porte-verres destiné plus particulièrement au traitement des verres optiques.

Un dispositif porte-verres peut habituellement être accroché à un support d'un chariot de convoyage d'une machine de traitement de verres optiques, ledit chariot de convoyage étant destiné au transport de verres optiques afin de les traiter par immersion dans plusieurs bains successifs de la machine de traitement.

Ces traitements peuvent être de diverses sortes, tels que des trempes chimiques, thermiques ou bien des traitements de résistance aux rayures, des traitements anti-éraflures, antireflet, anti-salissures, anti-ultraviolet, ou encore des traitements de coloration.

Il est connu du document EP1428585B1 de disposer d'un dispositif porte-verres comportant un support, ledit dispositif porte-verres étant accroché de façon à former avec un ensemble d'autres dispositifs similaires un alignement de dispositifs selon une direction déterminée, ledit dispositif porte-verres comportant, des moyens de suspension au support, et des moyens de maintien en position du verre optique.

En outre, les moyens de maintien comprennent des moyens de support du verre optique, lesdits moyens de support comportant au moins une butée fixe.

Les moyens de maintien comprennent également des moyens de rappel élastiques permettant la pose et la dépose du verre optique sur le dispositif porte-verres, lesdits moyens de rappel élastique comportant des paires de bras élastiques montés autour d'un rivet solidarisé à un corps du dispositif porte-verres.

Ce dispositif porte-verres est satisfaisant en ce qu'il assure un bon maintien du verre optique sans en recouvrir la moindre partie de ses deux faces principales ou optiques.

Néanmoins, l'ensemble des verres optiques convoyés par le chariot de convoyage est destiné à être immergé dans une succession de bains de traitement.

Chacun de ces bains est contenu dans une cuve dédiée et il convient de réduire au maximum l'encombrement de ces cuves afin de réduire l'encombrement de la machine de traitement.

Des dispositifs porte-verres agencés pour porter plusieurs verres sont connus des documents GB 2 208 322 et US 5 446 596.

Parallèlement, pour optimiser la production, il convient d'immerger en une seule fois un maximum de verres optiques.

La présente invention a donc pour objectif de réduire l'encombrement des cuves tout en ayant une capacité de chargement en verre optiques d'un chariot de convoyage au moins équivalente à celle de l'état de la technique sans détérioration des qualités de dépôt dues à l'immersion des verres dans les bains de traitement.

A cet effet, la présente invention a pour objet un dispositif porte-verres selon la revendication 1.

Cette disposition permet de réduire la largeur des cuves de part et d'autre du support tout en conservant les qualités de traitements des verres.

Le crochet permet de s'affranchir des mouvements de balan qui pourraient être générés lors d'un changement de direction du chariot de convoyage.

Selon un mode de réalisation, les deux emplacements respectivement inscrits dans deux plans présentent un écart angulaire entre eux inférieur à 20° et un écart angulaire par rapport à la direction déterminée par l'alignement de l'ensemble des dispositifs porte-verres inférieur à 10°.

Cette disposition permet de positionner sensiblement parallèlement d'une part un emplacement par rapport à l'autre et d'autre part les deux emplacements par rapport à la direction déterminée par l'alignement de l'ensemble des dispositifs porte-verres.

Selon un mode de réalisation, le dispositif porte-verres comporte un corps disposé à l'extérieur d'un volume défini entre les deux emplacements.

Cette disposition permet d'effectuer des mesures optiques sur le verre sans être gêné par le corps du dispositif porte-verres.

Selon un mode de réalisation, le dispositif porte-verres comporte un corps s'étendant au moins en partie dans un volume défini entre les deux emplacements.

Cette disposition facilite la fabrication du dispositif porte-verres.

Selon un mode de réalisation, les moyens de maintien en position comportent chacun des moyens de support conférant un premier point d'appui pour le verre, des moyens de rappel élastiques conférant un deuxième et troisième point d'appui pour le verre.

Selon un mode de réalisation, les moyens de rappel élastique comportent des paires de bras élastiques.

Selon un mode de réalisation, les paires de bras élastiques sont retenus sur le corps du dispositif porte-verres.

Selon un mode de réalisation, les emplacements sont disposés de part et d'autre du corps, dans la direction transversale à la direction de l'alignement.

Cette disposition permet d'optimiser l'encombrement des verres optiques.

Selon un mode de réalisation, les deux paires de bras sont symétriques par rapport au corps.

Cette disposition permet de faciliter la fabrication du dispositif porte-verres qui ne nécessite ainsi que d'un même type de paire de bras.

Selon un mode de réalisation, chaque paire de bras est réalisée en une seule pièce.

Cette disposition permet de disposer d'une pièce avec une précontrainte prédéterminée.

Selon un mode de réalisation, les moyens de support sont fixés sur le corps.

Selon un mode de réalisation, les moyens de support du verre optique comportent deux butées disposées symétriquement de part et d'autre du corps.

Selon un mode de réalisation, les deux butées sont formées en une seule pièce.

Cette disposition facilite la fabrication du dispositif porte-verres.

Selon un mode de réalisation, les deux butées sont disposées à l'extrémité basse du corps.

Cette disposition optimise la dimension du corps.

Selon un mode de réalisation, les moyens de suspension et le corps du dispositif porte-verres sont formés en une seule pièce.

Cette disposition permet de faciliter la fabrication du dispositif porte-verres en diminuant le nombre de pièces nécessaires à sa réalisation.

Selon un mode de réalisation, les moyens de verrouillage comportent une portion de forme complémentaire à une portion d'accrochage sur le support.

Cette disposition permet de résoudre le problème du balan des dispositifs porte-verres autour du support.

Selon un mode de réalisation, tous les contours destinés à être immergés délimitent uniquement des surfaces ouvertes.

Cette disposition permet d'empêcher la formation d'un film de liquide du bain dans lequel est immergé le verre optique, ce film pouvant éclater et ainsi former des projetions pouvant atteindre le verre optique et rendre inhomogène le dépôt qui a été déposé sur ses surfaces.

La présente invention a également pour objet un chariot de convoyage destiné au transport de verres optiques afin de les traiter par immersion dans au moins un bain d'une machine de traitement, dans lequel ledit chariot de convoyage comporte un dispositif porte-verres tel que décrit précédemment.

La présente invention a également pour objet une machine de traitement de verres optiques comportant un tel chariot de convoyage.

De toute façon, l'invention sera bien comprise à l'aide de la description qui suit, en référence au dessin schématique annexé représentant, à titre d'exemple non limitatif, un dispositif porte-verres selon l'invention.
La figure 1 montre une vue générale en perspective d'un mode de réalisation d'un dispositif porte-verres selon l'invention.
La figure 2 montre une vue détaillée d'une première partie du dispositif de la figure 1.
La figure 3 montre une vue détaillée d'une deuxième partie du dispositif de la figure 1.
La figure 4 montre une vue détaillée d'une troisième partie du dispositif de la figure 1.
La figure 5 montre le dispositif porte-verres de la figure 1 en situation avec deux verres optiques sur un support d'un chariot de convoyage.
La figure 6 illustre l'alignement des dispositifs porte-verres de la figure 1 en situation au dessus d'une cuve.

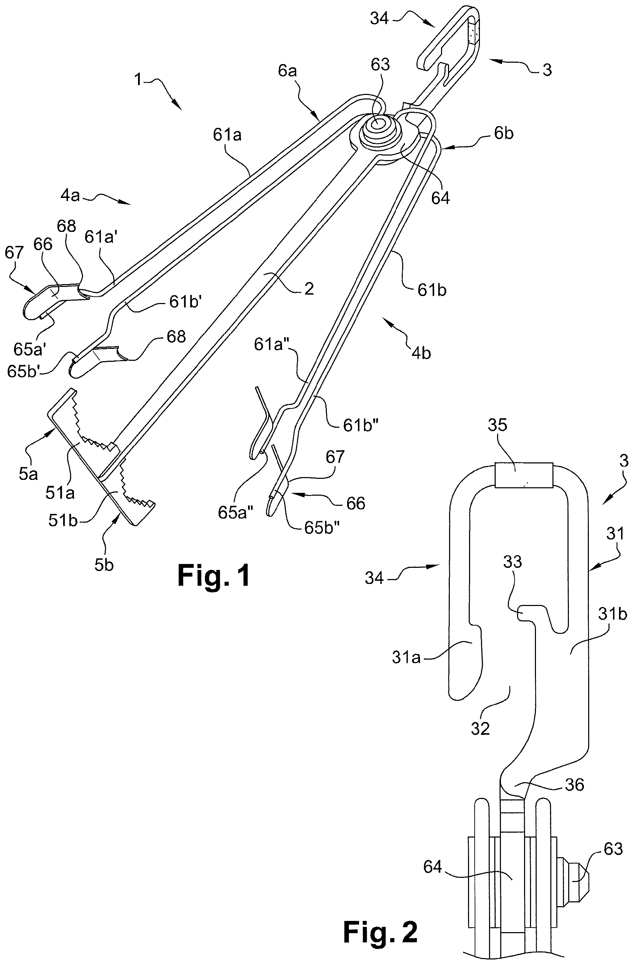

Comme illustré à la figure 1, un dispositif porte-verres 1 selon un mode de réalisation de l'invention comporte un corps central longiligne 2, autrement appelé hampe, auquel sont reliés des moyens de suspension 3 du dispositif porte-verres 1, notamment à un support 101 matérialisé par une barre de châssis 101 rectiligne d'un chariot de convoyage, et des moyens de maintien en position 4a, 4b du verre optique 10.

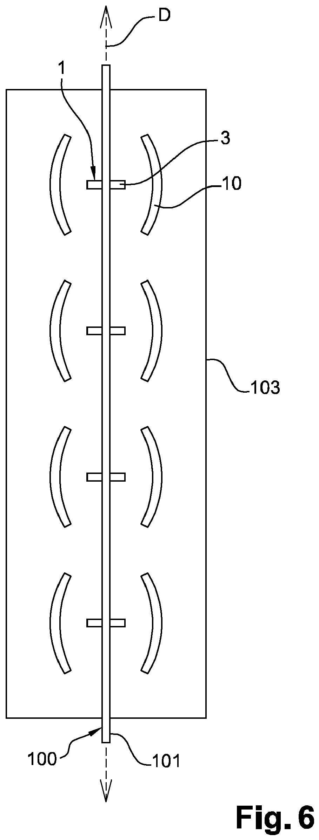

Un dispositif porte-verres 1 est ainsi accroché sur la barre de châssis 101 d'un chariot de convoyage avec un ensemble d'autres dispositifs 1 similaires de façon à former un alignement de dispositifs porte-verres 1 selon une direction D déterminée illustrée plus particulièrement à la figure 6.

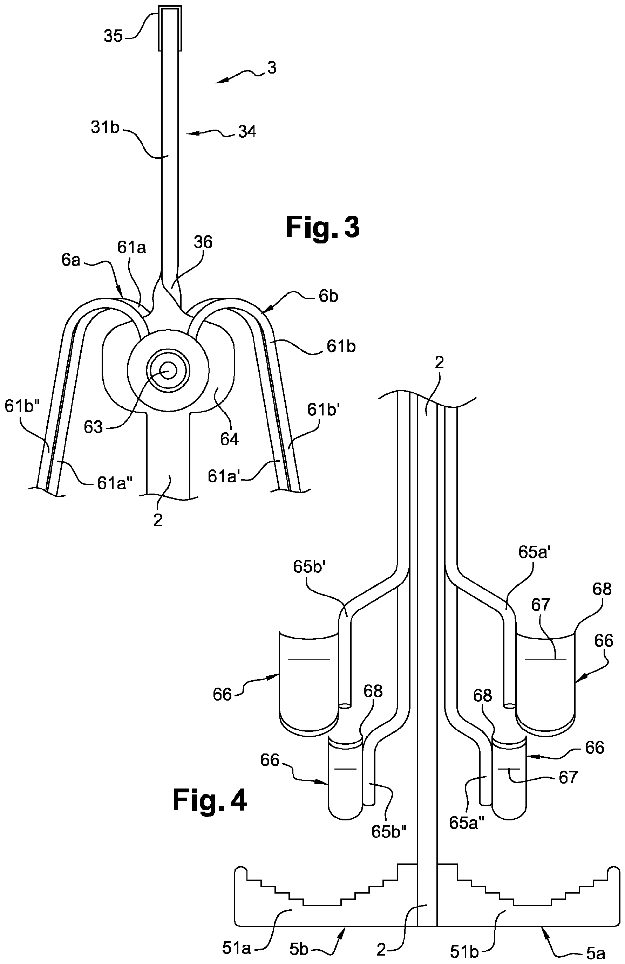

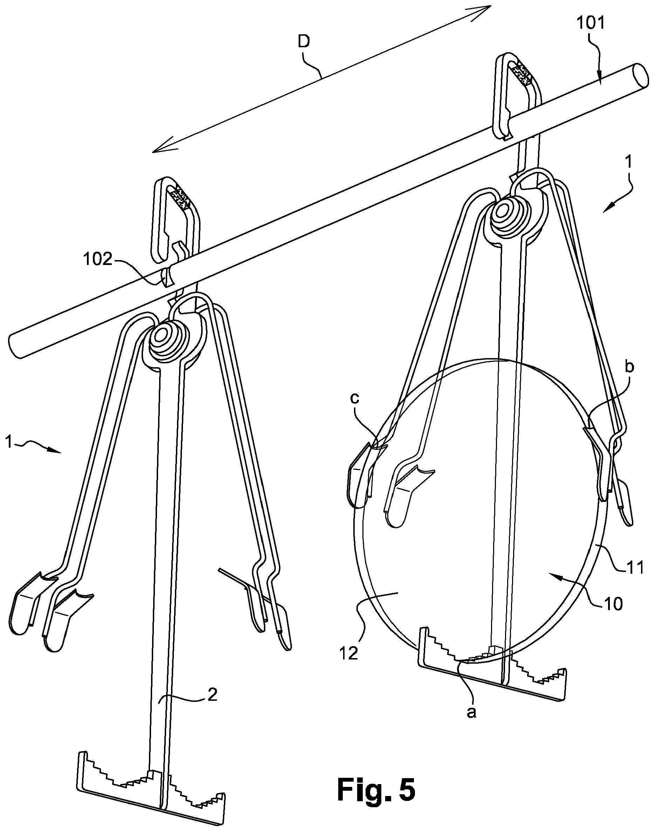

Dans un mode de réalisation illustré aux figures 1 à 5, chacun des dispositifs porte-verres 1 comprennent d'une part des premiers moyens de maintien 4a en position d'un premier verre optique 10 sur le dispositif porte-verres 1, disposés d'un premier côté du corps 2 du dispositif porte-verres 1 et définissant un premier emplacement pour le premier verre 10, et des seconds moyens de maintien 4b en position d'un second verre optique 10 sur le dispositif porte-verres 1, disposés d'un second côté du corps 2 du dispositif porte-verres 1 et définissant un second emplacement pour le second verre 10.

Les deux emplacements, définis par des points d'appui a, b, c sont définis de manière à ce que chaque positionnement d'un verre optique 10 est inscrit respectivement dans un plan différent, les deux plans étant d'une part sensiblement parallèles entre eux avec un écart inférieur à 30° et étant d'autre part sensiblement parallèles à la direction D déterminée par l'alignement de l'ensemble des dispositifs porte-verres 1 avec un écart inférieur à 30°.

Dans ce mode de réalisation, le corps 2 du dispositif porte-verres 1 s'étendant en partie dans un volume défini entre les deux emplacements.

Un verre-optique comprend deux faces principales 12 ou optiques et un bord périphérique 11.

Le volume défini entre les deux emplacements doit être interprété comme étant une zone de l'espace située entre les deux verres optiques 10, lorsque ceux-ci sont disposés sur leur emplacement respectif, et définie par l'ensemble des droites traversant les faces principales 12 ou optiques des deux verres-optiques 10.

Les moyens de suspension 3 d'un dispositif porte-verres 1 sont reliés à une première extrémité du corps 2 et forment un crochet 31 en forme de « U » renversé comportant deux branches 31a, 31b et une ouverture 32.

L'ouverture 32 créée entre les branches 31a, 31b du crochet 31 est destinée à recevoir la barre de châssis 101 d'un chariot de convoyage qui est enserrée entre une partie des branches 31a, 31b dont l'une 31a présente un profil rectiligne qui est engagé dans une encoche 102 dont le fond est lui aussi rectiligne, le blocage par complémentarité de forme réalisé par le contact entre les deux faces rectilignes respectivement de la branche 31a et du fond de l'encoche 102 ayant pour effet d'empêcher le corps 2 de tourner librement en rotation autour de la barre 101 et de tomber, ceci notamment lors d'un mouvement du chariot de convoyage dans une chaîne de traitement.

En outre, la branche 31a présente une butée 33 permettant de limiter l'insertion du dispositif porte-verres 1 sur la barre de châssis 101 afin de faire correspondre les deux faces rectilignes de la branche 31a et du fond de l'encoche 102.

Ces moyens de suspension 3 sont réalisés en une seule pièce avec le corps 2 mais séparés de celui-ci par une zone de torsion 36 plaçant les moyens de suspension 3 de manière générale dans un plan de même orientation que l'encoche 102, et plus particulièrement dans le mode de réalisation présenté dans un plan sensiblement orienté transversalement à un plan général du corps 2.

Les moyens de suspension 3 comprennent également des moyens de préhension 34 formé par la forme en « U » renversé, et définis par la butée 33, permettant de saisir le dispositif porte-verres 1 afin de le suspendre sur ou de le retirer de la barre de châssis 101.

Enfin, les moyens de suspension 3 comprennent un moyen de marquage 35, tel une bague, pour identifier rapidement un dispositif porte-verres 1 particulier.

Le dispositif porte-verres 1 peut ainsi être monté ou démonté facilement de la barre de châssis 101 par simple encliquetage du crochet 31 dans l'encoche 102 et il est alors possible d'effectuer des contrôles du verre optique 10 sans le toucher directement avec les doigts en retirant le dispositif porte-verres 1 correspondant de la barre de châssis 101.

Les moyens de maintien 4a, 4b en position comportent chacun respectivement des moyens de support 5a, 5b conférant un premier point d'appui a pour le verre 10, et respectivement des moyens de rappel élastiques 6a, 6b conférant un deuxième b et troisième c point d'appui pour le verre 10.

Les moyens de support 5a, 5b sont fixes par rapport au corps 2 et sont disposés sur la deuxième extrémité du corps 2 opposée à la première extrémité du corps 2 sur laquelle sont disposés les moyens de suspension 3.

Les moyens de support 5a, 5b de chaque moyen de maintien 4a, 4b comporte respectivement une butée 51a, 51b réalisée en une seule pièce avec l'autre butée 51a, 51b.

Chacune de ces butées 51a, 51b s'étend d'une manière générale selon une direction transversale à la direction d'alignement D de l'ensemble des dispositifs porte-verres 1 accrochés sur la barre de châssis 101 ce qui coïncide dans le mode de réalisation présenté, à une direction inscrite dans le même plan que celui dans lequel s'étend la forme en « U » renversé du crochet 31 des moyens de suspension 3.

La fixation des moyens de support 5a, 5b au corps 2 est réalisée en formant un assemblage du type tenon-mortaise par l'insertion ajustée des moyens de support 5a, 5b réalisant la fonction de tenon, dans une fente longitudinale à la direction du corps 2 usinée à l'extrémité du corps 2 réalisant la fonction de mortaise.

L'immobilisation des moyens de support 5a, 5b sur l'extrémité du corps 2 est ensuite réalisée par clinchage induisant une déformation plastique de l'extrémité du corps 2 sur les moyens de support 5a, 5b.

Chacune des deux butées 51a, 51b présentent un contour supérieur en forme de cuvette avec des bords latéraux en terrasse permettant de caler des verres optiques 10 d'épaisseurs différentes.

Les moyens de rappel élastiques 6a, 6b sont constitués par deux tiges 61a, 61b métalliques de faible épaisseur pliées en leur milieu de manière à former chacune deux bras respectivement 61a', 61a" et 61b', 61b".

Chacune des tiges 61a, 61b est disposée de part et d'autre du corps 2 du dispositif porte-verres 1 et s'étend sensiblement dans un plan parallèle à la direction D d'alignement de l'ensemble des dispositifs porte-verres 1 sur la barre de châssis 101, et plus précisément dans le mode de réalisation présenté, dans un plan transversal à un plan dans lequel s'inscrivent les moyens de suspension 3.

Chacune des tiges 61a, 61b est encastrée autour d'un axe matérialisé par un rivet 63 solidarisé au corps 2 au niveau de sa pliure sur une partie élargie 64 du corps 2 se trouvant à proximité immédiate de la zone de torsion 36 du corps 2 délimitant le corps 2 des moyens de suspension 3.

Les deux bras 61a', 61a" ou 61b', 61b" formés respectivement par chacune des tiges 61a, 61b sont rappelés élastiquement l'un vers l'autre, ce qui permet de pincer le verre optique 10 entre deux extrémités libres 65a', 65a" ou 65b', 65b" d'une même tige 61a, 61b par l'intermédiaire d'une pièce de contact 66 soudée sur chacune ces extrémités libres 65a', 65a" ou 65b', 65b".

Afin de ramener les deux emplacements des verres optiques 10 sur un plan sensiblement parallèle à la direction D formé par l'alignement de l'ensemble des dispositifs 1 sur la barre de châssis 101 et passant sensiblement par le centre de chaque butée 51a, 51b, les tiges 61a, 61b sont légèrement pliés en forme de chicane aux abords de chacune de leurs extrémités libres 65a', 65a" ou 65b', 65b", et chaque pièce de contact 66 est soudée sur le bord latéral de l'extrémité 65a', 65a" ou 65b', 65b" des tiges 61a, 61b opposée à l'autre tige 61a, 61b.

La pièce de contact 66 est une pièce métallique en forme de lame courbée comportant à son extrémité destinée à être en contact avec le verre optique 10 une découpe incurvée 67 permettant de tenir des verres optiques 10 d'épaisseurs variables.

Les découpes incurvées 67 font apparaître chacune deux pointes 68 permettant de tenir un verre optique 10 de grande épaisseur en disposant le bord périphérique 11 du verre optique 10 au contact des pointes 68 ce qui a pour effet, notamment après une application de vernis ou autre liquide, de ne pas altérer ce dernier du fait d'une surface de contact réduite.

Les verres optiques 10 de faible épaisseur sont maintenus en disposant leur bord périphérique 11 entre les deux pointes 68 de chaque découpe 67.

Le dispositif porte-verres 1 ainsi obtenu permet de composer un ensemble de dispositif porte-verres 1 similaires d'encombrement réduit permettant de réduire les dimensions des cuves 103 des différents bains et d'augmenter le nombre de verres optiques 10 traités simultanément par trempage dans un bain.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons.

C'est ainsi que les écarts angulaires mentionnés s'entendent en valeur absolue.

## Revendications

1. Dispositif porte-verres (1) destiné à être accroché à un support (101) d'un chariot de convoyage destiné au transport de verres optiques (10) afin de les traiter par immersion dans au moins un bain d'une machine de traitement, ledit dispositif porte-verres (1) étant accroché de façon à former avec un ensemble d'autres dispositifs similaires un alignement de dispositifs selon une direction déterminée, ledit dispositif porte-verres (1) étant caractérisé en combinaison par:
- des moyens de suspension (3) au support (101) comportant un crochet (31) permettant de solidariser de manière amovible le dispositif porte-verres (1) sur son support (101) et présentant des moyens de verrouillage (31a) empêchant la rotation libre du dispositif porte-verres (1) autour de son support (101),
- des premiers moyens de maintien (4a) en position d'un premier verre optique (10) sur le dispositif porte-verres (1), comprenant des points d'appui (a, b, c) définissant un premier emplacement pour le premier verre (10),
- des seconds moyens de maintien (4b) en position d'un second verre optique (10) sur le dispositif porte-verres (1), comprenant des points d'appui (a, b, c) définissant un second emplacement pour le second verre (10),
les deux emplacements étant respectivement inscrits dans deux plans présentant un écart angulaire entre eux inférieur à 30° et un écart angulaire par rapport à la direction déterminée par l'alignement de l'ensemble des dispositifs porte-verres (1) inférieur à 30°.

2. Dispositif porte-verres (1) selon la revendication 1, dans lequel les deux emplacements respectivement inscrits dans deux plans présentent un écart angulaire entre eux inférieur à 20° et un écart angulaire par rapport à la direction déterminée par l'alignement de l'ensemble des dispositifs porte-verres inférieur à 10°.

3. Dispositif porte-verres (1) selon l'une des revendications 1 à 2 comportant un corps (2) disposé à l'extérieur d'un volume défini entre les deux emplacements.

4. Dispositif porte-verres (1) selon l'une des revendications 1 à 2 comportant un corps (2) s'étendant au moins en partie dans un volume défini entre les deux emplacements.

5. Dispositif porte-verres (1) selon l'une des revendications 1 à 4 dans lequel les emplacements sont disposés de part et d'autre du corps, dans la direction transversale à la direction de l'alignement.

6. Dispositif porte-verres (1) selon l'une des revendications 1 à 5 dans lequel les moyens de maintien (4a, 4b) en position comportent chacun :
- des moyens de support (5) conférant un premier point d'appui (a) pour le verre (10),
- des moyens de rappel élastiques (6) conférant un deuxième (b) et troisième (c) point d'appui pour le verre (10).

7. Dispositif porte-verres (1) selon la revendication 6 dans lequel les moyens de rappel élastique (6) comportent des paires (61, 62) de bras élastiques (61a, 61b, 62a, 62b) indépendants pour chaque emplacement de positionnement d'un verre.

8. Dispositif porte-verres (1) selon l'une des revendications 6 à 7 dans lequel les moyens de support (5) du verre optique (10) comportent deux butées (51, 52) disposées symétriquement de part et d'autre d'un plan dans lequel s'inscrit le corps (2).

9. Dispositif porte-verres (1) selon l'une des revendications 1 à 8 dans lequel tous les contours destinés à être immergés délimitent uniquement des surfaces ouvertes.

10. Chariot de convoyage destiné au transport de verres optiques (10) afin de les traiter par immersion dans au moins un bain d'une machine de traitement, dans lequel ledit chariot de convoyage comporte un dispositif porte-verres (1) selon l'une des revendications 1 à 9.

11. Machine de traitement de verres optiques (10) comportant un chariot de convoyage selon la revendication 10.

## Patentansprüche

1. Vorrichtung zum Tragen von Gläsern (1), ausgelegt, um an eine Stütze (101) eines Förderwagens befestigt zu sein, der für den Transport von optischen Gläsern (10) ausgelegt ist, um sie durch Eintauchen in mindestens ein Bad einer Behandlungsmaschine zu behandeln, wobei die Vorrichtung zum Tragen von Gläsern (1) derart befestigt ist, um mit einer Einheit von anderen ähnlichen Vorrichtungen eine Ausfluchtung von Vorrichtungen gemäß einer bestimmten Richtung zu bilden, wobei die Vorrichtung zum Tragen von Gläsern (1) gekennzeichnet ist in Kombination durch:
- Mittel zum Aufhängen (3) auf die Stütze (101), umfassend einen Haken (31), der ermöglicht, die Vorrichtung zum Tragen von Gläsern (1) auf abnehmbare Weise fest auf ihre Stütze (101) zu verbinden und Verriegelungsmittel (31a) aufweist, die die freie Drehung der Vorrichtung zum Tragen von Gläsern (1) um ihre Stütze (101) verhindern,
- erste Haltemittel (4a) in Position eines ersten optischen Glases (10) auf der Vorrichtung zum Tragen von Gläsern (1), umfassend Auflagepunkte (a, b, c), die eine erste Stelle für das erste Glas (10) definieren,
- zweite Haltemittel (4b) in Position eines zweiten optischen Glases (10) auf der Vorrichtung zum Tragen von Gläsern (1), umfassend Auflagepunkte (a, b, c), die eine zweite Stelle für das zweite Glas (10) definieren,
wobei die zwei Stellen jeweils auf zwei Ebenen liegen, die eine Winkelabweichung voneinander von weniger als 30° und eine Winkelabweichung mit Bezug auf die Richtung, bestimmt durch die Ausfluchtung der Einheit der Vorrichtungen zum Tragen von Gläsern (1), von weniger als 30° aufweisen.

2. Vorrichtung zum Tragen von Gläsern (1) nach Anspruch 1, wobei die zwei Stellen, die jeweils auf zwei Ebenen liegen, eine Winkelabweichung voneinander von weniger als 20° und eine Winkelabweichung mit Bezug auf die Richtung, bestimmt durch die Ausfluchtung der Einheit der Vorrichtung zum Tragen von Gläsern, von weniger als 10° aufweisen.

3. Vorrichtung zum Tragen von Gläsern (1) nach einem der Ansprüche 1 bis 2, umfassend einen Körper (2), der außerhalb eines Volumens angeordnet ist, das zwischen den zwei Stellen definiert ist.

4. Vorrichtung zum Tragen von Gläsern (1) nach einem der Ansprüche 1 bis 2, umfassend einen Körper (2), der sich mindestens teilweise in einem Volumen erstreckt, das zwischen den zwei Stellen definiert ist.

5. Vorrichtung zum Tragen von Gläsern (1) nach einem der Ansprüche 1 bis 4, wobei die Stellen auf beiden Seiten des Körpers in der Querrichtung zur Richtung der Ausfluchtung angeordnet sind.

6. Vorrichtung zum Tragen von Gläsern (1) nach einem der Ansprüche 1 bis 5, wobei die Haltemittel (4a, 4b) in Position jeweils Folgendes umfassen:
- Stützmittel (5), die dem Glas (10) einen ersten Auflagepunkt (a) verleihen,
- elastische Rückstellmittel (6), die dem Glas (10) einen zweiten (b) und dritten (c) Auflagepunkt verleihen.

7. Vorrichtung zum Tragen von Gläsern (1) nach Anspruch 6, wobei die elastischen Rückstellmittel (6) Paare (61, 62) von unabhängigen elastischen Armen (61a, 61b, 62a, 62b) für jede Stelle der Positionierung eines Glases umfassen.

8. Vorrichtung zum Tragen von Gläsern (1) nach einem der Ansprüche 6 bis 7, wobei die Mittel zum Stützen (5) des optischen Glases (10) zwei Anschläge (51, 52) umfassen, die symmetrisch auf beiden Seiten einer Ebene angeordnet sind, in der der Körper (2) liegt.

9. Vorrichtung zum Tragen von Gläsern (1) nach einem der Ansprüche 1 bis 8, wobei alle Umfänge, die ausgelegt sind, um eingetaucht zu werden, nur offene Oberflächen begrenzen.

10. Förderwagen, der für den Transport von optischen Gläsern (10) ausgelegt ist, um sie durch Eintauchen in mindestens ein Bad einer Behandlungsmaschine zu behandeln, wobei der Förderwagen eine Vorrichtung zum Tragen von Gläsern (1) nach einem der Ansprüche 1 bis 9, umfasst.

11. Maschine zur Behandlung von optischen Gläsern (10), umfassend einen Förderwagen nach Anspruch 10.

## Claims

1. A lens-holding device (1) intended to be hooked on a support (101) of a conveying carriage for the transport of optical lenses (10) in order to treat them by immersion in at least one bath of a treatment machine, said lens-holding device (1) being hooked so as to form with a set of other similar devices an alignment of devices in a determined direction, said lens-holding device (1) being **characterized in** combination by:
- suspension means (3) to the support (101) including a hook (31) allowing to removably secure the lens-holding device (1) on its support (101) and having locking means (31a) preventing the free rotation of the lens-holding device (1) about its support (101),
- first means (4a) for maintaining in position a first optical lens (10) on the lens-holding device (1), comprising bearing points (a, b, c) defining a first location for the first lens (10),
- second means (4b) for maintaining in position a second optical lens (10) on the lens-holding device (1), comprising bearing points (a, b, c) defining a second location for the second lens (10),
the two locations being respectively part of two planes having an angular deviation therebetween less than 30° and an angular deviation relative to the direction determined by the alignment of the set of the lens-holding devices (1) less than 30°.

2. The lens-holding device (1) according to claim 1, wherein the two locations which are respectively part of two planes have an angular deviation therebetween less than 20° and an angular deviation relative to the determined direction by the alignment of the set of the lens-holding devices less than 10°.

3. The lens-holding device (1) according to any of claims 1 to 2, including a body (2) disposed outside a volume defined between the two locations.

4. The lens-holding device (1) according to any of claims 1 to 2, including a body (2) extending at least partially in a volume defined between the two locations.

5. The lens-holding device (1) according to any of claims 1 to 4, wherein the locations are disposed on either side of the body, in the direction transverse to the direction of the alignment.

6. The lens-holding device (1) according to any of claims 1 to 5, wherein the position maintaining means (4a, 4b) each include:
- support means (5) conferring a first bearing point (a) for the lens (10),
- elastic return means (6) conferring a second (b) and a third (c) bearing point for the lens (10).

7. The lens-holding device (1) according to claim 6 wherein the elastic return means (6) include pairs (61, 62) of independent elastic arms (61a, 61b, 62a, 62b) for each positioning location of a lens.

8. The lens-holding device (1) according to any of claims 6 to 7, wherein the support means (5) of the optical lens (10) include two stops (51, 52) disposed symmetrically on either side of a plane of which the body (2) is part.

9. The lens-holding device (1) according to any of claims 1 to 8, wherein all contours intended to be immersed delimit only open surfaces.

10. A conveying carriage for the transport of optical lenses (10) in order to treat them by immersion in at least one bath of a treatment machine, wherein said conveying carriage includes a lens-holding device (1) according to any of claims 1 to 9.

11. A machine for treating optical lenses (10) including a conveying carriage according to claim 10.
